(19) Europäisches Patentamt
European Patent Office
Office européen des brevets

(11) **EP 2 939 814 B1**

(12) **EUROPEAN PATENT SPECIFICATION**

(45) Date of publication and mention
of the grant of the patent:
**15.06.2016 Bulletin 2016/24**

(51) Int Cl.:
***B29C 45/00*** *(2006.01)*   ***B65D 1/02*** *(2006.01)*
***C08L 91/00*** *(2006.01)*

(21) Application number: **14166673.5**

(22) Date of filing: **30.04.2014**

(54) **Polymer composition for a container closure**

Polymerzusammensetzung für einen Behälterverschluss

Composition polymère pour la fermeture d'un récipient

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.11.2015 Bulletin 2015/45**

(73) Proprietor: **SCG Chemicals Co., Ltd.
Bangkok 10800 (TH)**

(72) Inventors:
• **Katchamart, Saranya
10800 Bangkok (TH)**
• **Cheevasrirungruang, Watcharee
10800 Bangkok (TH)**
• **Koomsup, Kittipong
10800 Bangkok (TH)**

• **Mattayan, Arunsri
10800 Bangkok (TH)**
• **Ngowthanawat, Apiwat
10800 Bangkok (TH)**

(74) Representative: **Scholz, Volker
Boehmert & Boehmert
Anwaltspartnerschaft mbB
Patentanwälte Rechtsanwälte
Pettenkoferstrasse 20-22
80336 München (DE)**

(56) References cited:
**WO-A1-00/32695     GB-A- 849 389
US-A- 3 243 395     US-A1- 2008 085 971
US-A1- 2010 168 335**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a polymer composition and a container closure comprising the polymer composition.

It is generally known that polyethylene compositions used for bottles cap & closure provide good processing for article moldings, cracking resistance and good retention for $CO_2$, which are applicable for both water and carbonated beverages. The key requirements also relate to organoleptic properties which is acceptance of end users and also the slip properties representing easy opening features. Various kinds of additives were applied to meet these requirements, however the optimizing properties between organoleptic and slip properties are still interesting issues to improve both properties in a positive way. Some typical examples of compositions for caps and closures are disclosed in US5045594, US5186991, US6399170, WO0162837, US4462502 and EP73334.

EP1655336 A1 relates to a polyethylene composition for injection molded articles, in particular for cap and closure. The composition has an $MFR_2$ of 0.1 to 100 g/10min, the shear thinning index SHI (1.100) and the log $MFR_2$ of the composition satisfy the follow relation :

$$SHI_{(1,100)} \geq -10.58 \log MFR_2 [g/10min]/(g/10min)+12.94,$$

and the composition has an environmental stress crack resistance ESCR of 10 h or more.

EP2384351 A1 discloses a high-density polyethylene composition for making a closure device comprising a first component having high molecular weight which has a density in the range of 0.927-0.938 g/cm3 and melt flow rate in the range of 4-10 g/10 min; and a second component having low molecular weight which has a density in the range of 0.960-0.975 g/cm3. The high-density polyethylene composition has a melt index in the range of 2-10 g/10 min; a density in the range of 0.950-0.960 g/cm3, and a flow direction shrinkage ratio in the range of 2-3.2 and an environmental stress crack resistance (ESCR) in the range of equal to or greater than 50 hours.

US6806313B2 discloses a composition for beverage container closure that comprises (a) a matrix polymer, copolymer, or blend thereof selected from thermoplastic polymer; (b) a lubricant comprising an organopolysiloxane which preferably is poly(dimethyl) siloxane ; (c) a slip aid comprising a saturated amide and oxidized polyethylene.

EP1146077 A1 discloses a bimodal HDPE composition for producing moulded articles improving E-modulus and ESCR that comprises a low molecular weight ethylene homopolymer or ethylene copolymer and a high molecular weight ethylene polymer or copolymer. This composition further contains nucleating agents which are an organic group and a polar group such as mono- or polycarboxylic aromatic acids or salts thereof especially sodium benzoate.

EP1278797 A1 discloses a polyethylene composition for producing bottle caps which comprises at least 94.5 % by weight of polyethylene having density of more than 940 kg/m3, 0.05 to 0.5 by weight of at least saturated fatty acid amide containing 8 to 30 carbon atoms, 0 to 0.15 % by weight of a subsidiary lubricant, and 0 to 5 % by weight of one or more additives. The saturated fatty acid amide effectively is behenamide.

US6,797,756 B2 describes a polymer composition for manufacturing screw caps intended for drinks bottles which are easy to unscrew and at the same time avoid transmitting a taste and/or a smell to the drinks contained in the bottles. The composition comprises polyethylene, at least one stabilizer, and at least one additive; (a) natural, modified or refined lignite waxes or montan waxes, (b) polyolefin-based or paraffin-based polar waxes and, (c) refractory or metal oxides grafted by polyalkylene glycol.

WO00/32695 A1 discloses a polymer composition comprising an ethylene/1-butene copolymer with a density of 951 kg/m$^3$, 0.2 weight percent of a polar polyolefin wax and 0.3 weight percent of further additives.

It is known to use a polyethylene composition for cap and closure containing a lubricant such as fatty acid amides (e.g. oleamide, erucamide, and behenamide), lignite wax or montan wax and/or an amide wax. The screw caps which generally use fatty acid amides as slip agent, especially erucamide, are easy to open or unscrew with lower torque, but from its composition can attribute the oxidation and lead to off-taste and off-flavors occurring to the content of the bottle because of its low molecular weight and unsaturated bond in the molecule.

Typically, polyolefin wax having high molecular weight provides outstanding capability of filler wetting, thermoplastic extrusion processing, underwater pelletizing and compatibility to polyethylene and polypropylene. In addition, it has been well known for use in toner, for preparing masterbatches of pigments or dyes for coloring polymer and for printing inks.

Even though polymer compositions for caps and closures are known and have been described, there is still a need for developing novel effective polymer compositions that overcome the difficulty of opening and transferring a taste and/or smell to the drinks contained in the bottles.

It is thus an object of the present invention to provide a polymer composition which can be used as a container closure, such as a cap closure, which overcomes the difficulties of the prior art. Especially, the polymer composition shall allow easy opening, i.e. low torque, of the container closure prepared thereby and should avoid the transfer of taste and/or smell to the content contained in the container. The polymer composition shall preferably show improved organoleptic properties, good open torque and good mechanical properties.

It is a further object of the present invention to provide a container closure comprising such a polymer composition.

The first object is achieved by a polymer composition for a container closure comprising a) at least 94.99 wt% polyethylene, wherein the polyethylene is high density polyethylene having a density of 0.940-0.970 g/cm$^3$ and a MFR2 of 0.5-15 g/10 min, b) 0.01-1.0 wt% polyolefin wax, wherein the polyolefin wax has a weight average molecular weight of up to 10,000 g/mol, a density of 0.850-0.921 g/cm$^3$ and is selected from polyethylene wax or polypropylene wax, c) 0.01-5.0 wt% additives, wherein the weight percentages are based on the total weight of the polymer composition..

A further object is achieved by the container closure according to claim 12.

Preferred embodiments are disclosed in the sub-claims.

Surprisingly, it was found that the polyolefin wax having a molecular weight of up to 10000 g/mol can be used as slip agent to improve an organoleptic property with balancing the opening torque compared to known slip agents. In comparison with other slip agents having lower molecular weight and containing an unsaturated bond which can easily migrate to the surface of the container and transmit smell and/or taste to the contents contained in the container, polyolefin wax can perform very good slip properties, that means less migration to the surface of the container and less transmitting of smell and/or taste to the contents, such as drinks. In addition, a higher molecular weight of polyolefin wax, such as polypropylene wax, may result in less emission of volatile substances from the formulation and during article moldings.

The polyethylene used in the polymer composition may have a unimodal or multimodal, preferably bimodal, molecular weight distribution and has a melt flow rate of 0.5-15 g/cm min and a density of 0.940-0.970 g/cm$^3$. The unimodal polyethylene may be copolymer of ethylene and at least one alpha-olefins comonomer comprising 3-10 carbon atoms. Preferred comonomer is 1-butene. The multimodal polyethylene composition which is preferably bimodal polyethylene may consist of a fraction A which is homopolymer and a fraction B which is copolymer of ethylene and at least one alpha-olefins comonomer comprising 3-10 carbon atoms. Preferred comonomers are 1-butene and 1-hexene; most preferable is 1-butene.

A suitable polyolefin wax for use in the inventive polymer composition is selected from polyethylene or polypropylene wax having carbon atoms of 100 to 180, and more preferably 130 to 150 Such a polyolefin wax can be prepared by well-known methods, such as metallocene-catalyzed polymerization, traditional Ziegler/Natta-polymerization, especially of propylene, thermal cracking, etc. The polyolefin wax has preferably a weight average molecular weight of 7000 to 8000 g/mol and more preferably 7700 to 8000 g/mol, a polydispersity Index (PDI) = 2-8, preferable = 2 , isotactic index pentad (mmmm) by NMR of approximately 76.00-78.00 %, and has a density of 0.850-0.921 g/cm$^3$, a % Crystallinity = 60- 65 % with preferably no functional group in the chain, a melt viscosity measured at 170°C of less than 30 -90 cP, preferable 50-70 cP. Also, a dropping point of this polypropylene wax may be around 142-148 °C and a penetration index around 0.5-1.0. However, the optimum content should be considered to avoid poor organoleptic properties. The content of polypropylene wax in the composition is preferably in the range of 0.02-1.0 %wt, more preferable 0.05-0.5 %wt, most preferable 0.05-0.3 % wt.

In addition, the composition can contain other additives to enhance thermal and/or UV stability during manufacturing, storing of the material, or during processing and end-use, for example antioxidant, UV absorber, UV stabilizer, and also neutralizer. The total composition of one or more additives content is in the range of 0.01-5 %wt

Phenolic antioxidants are the most widely used antioxidants for polymer. In this invention, primary and secondary antioxidants are normally selected from sterically hindered phenols, organic phosphites or phosphonites and mixtures thereof. The concentration normally is at least 0.2%wt.

UV stabilizer and absorber are generally used to prevent or slow down degradation caused by exposure to ultraviolet radiation. Exposure to sunlight causes products to break down over time. These stabilizers can be added in lower concentrations because only a small amount is needed to be effective. The concentration normally is within the range of 0.2%wt.

The use of additives, such as metal stearates to neutralize acid residues has been selected from the acid scavenger or neutralizer: zinc stearate, calcium stearate, zinc oxide, and hydrotalcite. The amount of neutralizer used varies to not less than 0.05%wit.

**Definition and measurement method**

The weight average molar mass in g/mol of polyethylene and polyolefin wax are determined by gel permeation chromatography, GPC. The type of GPC is GPC-IR5 from Polymer Char.

MFR2: Melt flow rate (MFR) of polyethylene is measured according to ASTM D 1238 and indicated in g/10 min that determines the flowability of polymer under testing condition at 190°C with load 2.16 kg.

Density: Density of polyethylene is measured by gradient tube following ASTM D 1505.

**Opening Torque; OT7 (Method A):** 1 day after cap injection , 5 selected caps having diameter of 28 mm, which were injected using cap model called PCO1810, were capped on PET bottles with 500 ml drinking water at constant torque of 2.5 Nm. After 7 days, the torque to open the cap was measured..

**Opening Torque; OT7 (Method B): 1** day after cap injection , 24 selected caps with diameter of 28 mm flat for sparkling water, each cap weights 1.85 g which was capped on PET bottle with 500 ml sparkling water at constant torque 2.5 Nm. After 7 days, the torque to open the cap was measured.

**Organoleptic index:** 1000 ml glass bottles are filled with 1000 ml drinking water and filled with 3.125 gram of polymer composition. The condition is 60°C for 48 hrs under QUV Chamber (UVB), and then cooling at 24 °C, for 2 hrs. The taste test is analyzed from the aging water by triangle test which is a type of sensory test. High score of organoleptic index means bad flavor.

The **measurement method of triangle test:** The panelist receives three coded samples, is told that two samples are alike and one is different. Analysis of results is based on comparing the number of correct answers with the number you would expect to get by chance alone, if there was no difference between samples. This test is useful in quality control to determine if product from different production lots is the same or if ingredient substitution results are detectable. This test may also be used for screening panelists with only those who can detect a difference selected for the panel. The triangle test does not usually indicate degree of amount of difference, and the panelist should be asked to specify the characteristic that is different.

**Spiral Flow Test** is carried out by Fanuc Roboshot S2000i 100B injection molding machine with spiral mold with thickness 1 mm at 190°C. After conditioning a sample for 24 hr, the spiral flow length (mm) was measured by jig.

**ESCR (F50 method B):** Environmental stress crack resistance was measured according to ASTM D 1693. Experiments were conducted at 50°C in a temperature bath containing 10% vol. by vol. of Igepal (nonyl phenyl ethoxylate) solution. Samples were conditioned at 23°C and 50% relative humidity for at least 48 h before testing. The notches were inserted using a cutting blade for notching specimens. Samples were immersed into temperature bath and were examined for cracks every hour in the first twenty four hours. At least ten samples were tested to determine the average values. Then, samples were examined until 50% of samples cracked.

**Flexural Modulus:** The specimen was prepared and test performed according to ASTM D 790. The flexural tests were done using a universal testing machine equipped with three point bending fixture. The machine was equipped with a temperature chamber to test the samples at elevated temperatures. The span in the bending test was 48 mm, and the loading point for the test was in the centre. The crosshead speed was 12.8 mm/min.

**IZOD impact:** The Izod impact testing was done following ASTM D 256 to determining the impact resistance of materials. An arm held at a specific height (constant potential energy) is released. The arm hits the sample and breaks it. From the energy absorbed by the sample, its impact energy is determined. A notched sample is generally used to determine impact energy and notch sensitivity at temperature 23°C.

**Shrinkage:** The specimens for Machine direction (MD) & Transverse direction (TD) with dimension 133 x 133 x 2 mm were shaped by injection molding machine. Then conditioning for 24 hr, at the temperature of 23 $\pm$3°C, and the humidity of 50 $\pm$ 5% for 24 hours after that measuring the dimension by Digital Caliper and calculate % shrinkage compare with mold standard dimension.

**Polydispersity** means the ratio of Mw/Mn which Mw is weight average molar mass in g/mol and Mn is number average molar mass in g/mol determined by Gel permeation chromatography, GPC.

**Crystallinity** has been determined by DSC (Differential scanning calorimetry) using a METTLER MODEL DSC823 ,heating rate = 10 C/min according to ASTM D3418

**The isotactic index** has been determined by NMR using a BRUKER spectrometer to analyse quantitatively evaluating pentad sequences

**Melt viscosity** has been determined by BROOKFIELD VISCOMETER at 170 C according to ASTM D1986

**Dropping point** has been determined by FP90 Dropping Point using METTLER according to ASTM D 3954-94.

**Penetration index** has been determined by Penetrometer according to ASTM D 1321.

Additional advantages and features of the present invention can be taken from the following detailed examples section.

## Examples

The examples for this invention are illustrated as shown in Table 1 and 2.

**Example 1 and 2**:The compositions of Example 1 and 2 were mixed and granulated by extruder at 190 - 200°C.Pellets of the polymer composition were analyzed for MFR, density, mechanical properties, and spiral flow test. One-piece screw caps were produced by injection molding. Then, the caps were tested including organoleptic and opening torque.

**Example 3 and 4 (Comparative based on various slip agent type):** The preparation and analysis of Example 3 and 4 were repeated as in Example 1, but adjust antioxidants content, UV stabilizer and absorber content, and slip agent type, as shown in Table 1. The slip agent type was compared between behenamide and erucamide with polypropylene wax in Example 1.

**Example 5 and 6:** The composition of Comparative Example 5 and Example 6 were mixed as in Example 1. The preparation and analysis of Comparative Example 5 and Example 6 were repeated as Example 1.

A comparison of the results from Example 1, Comparative Example 3, and Comparative Example 4 shows that uni-modal polyethylene in Example 1 using polypropylene wax as slip agent gives better organoleptic properties than using erucamide while equal to behenamide. (Comparative Example 3 and 4, respectively). While the opening torque of polyethylene with polypropylene wax was lower than using behenamide. The results show the same trend in uni-modal and multi-modal polyethylene from Comparative Example 5 and Example 6. Surprisingly, the polymer compositions containing polypropylene wax in the invention can improve the organoleptic and slip properties for cap and closure application.

The comparison of the results from Example 1 and 2 demonstrate that a higher content of polypropylene wax as slip agent gives lower opening torque while still providing better organoleptic properties than erucamide.

In the Examples 2 and 6, the results show that using polypropylene wax as slip agent in both uni-modal and multi-modal polyethylene give better organoleptic properties and low opening torque.

Using especially polypropylene wax as slip agent in polymer compositions for screw cap does not affect mechanical properties of caps and closures application. Not only better organoleptic properties and opening torque are obtained, but also better processability as shown in higher spiral flow length at 190°C when using polypropylene as slip agent at optimized content from Examples 2 compared to Comparative Example 4 and Comparative Example 5 compared to Example 6.

**Table 1**

| Example No. | Polyethylene (%wt) | Additives amount (%wt) | | | |
|---|---|---|---|---|---|
| | | Antioxidants | UV absorber & stabilizer | Neutralizer | Slip agent |
| 1 | Unimodal99.7 3 | 0.06 | 0.06 | 0.15 | polypropylene wax 0.20 |
| 2 | Unimodal 99.73 | 0.06 | 0.06 | 0.15 | polypropylene wax 0.24 |
| 3 | Unimodal99.5 7 | 0.18 | 0.10 | 0.15 | Behenamide 0.20 |
| 4 | Unimodal 99.83 | 0.02 | - | 0.15 | Erucamide 0.18 |
| 5 | bimodal 99.83 | 0.02 | - | 0.15 | Erucamide 0.18 |
| 6 | bimodal99.73 | 0.06 | 0.06 | 0.15 | polypropylene wax 0.24 |

**Table 2**

| Properties | Ex.1 | Ex.2 | Ex.3 | Ex.4 | Ex.5 | Ex.6 |
|---|---|---|---|---|---|---|
| Polyethylene | Unimodal | Unimodal | Unimodal | Unimodal | bimodal | bimodal |
| MFR (g/10min) | 1.72 | 1.78 | 1.60 | 1.76 | 0.93 | 0.92 |
| Density (g/cm$^3$) | 0.9552 | 0.9551 | 0.9556 | 0.9554 | 0.9547 | 0.9546 |
| Organoleptic Index | 12 | 11 | 13 | 24 | 24 | 13 |
| Opening torque Method A (Nm) : OT7A | 2.05 | 1.96 | | 1.56 | 1.63 | 1.89 |
| Opening torque Method B (Nm) : OT7B | 1.74 | 1.54 | 2.16 | - | - | - |
| Spiral flow length @ 190°C (mm) | 199 | 240 | 243 | 238 | 267 | 275 |
| ESCR : F50 (hr) Method B, 10% Irgepal | 24 | 24 | - | 24 | 96 | 48 |
| Flexural modulus (kg/cm$^2$) | 10852 | 10841 | 11591 | 10326 | 11797 | 11690 |
| Flexural strength (kg/cm$^2$) | 330 | 324 | 337 | 315 | 316 | 314 |
| IZOD impact strength @23 C (kg.cm/cm) | 6.4 | 7.4 | 7.1 | 6.8 | 8.9 | 9.8 |
| % Shrinkage (MD) | 2.68 | 2.59 | 2.54 | 2.26 | 2.40 | 2.31 |
| % Shrinkage (TD) | 1.76 | 1.52 | 1.32 | 1.39 | 1.13 | 2.13 |

The features disclosed in the foregoing description and in the claims may, both separately and in any combination thereof, be material for realizing the invention in diverse forms thereof.

**Claims**

1. Polymer composition for a container closure comprising:

    a) at least 94.99 wt% polyethylene, wherein the polyethylene is high density polyethylene having a density of 0.940- 0.970 g/cm$^3$ and a MFR2 of 0.5-15 g/10 min
    b) 0.01-1.0 wt% polyolefin wax, wherein the polyolefin wax has a weight average molecular weight of up to 10,000 g/mol, a density of 0.850-0.921 g/cm$^3$ and is selected from polyethylene wax or polypropylene wax
    c) 0.01-5.0 wt% additives, wherein the weight percentages are based on the total weight of the polymer composition.

2. Polymer composition according to claim 1, wherein the polyethylene has a unimodal or multimodal, preferably bimodal, molecular weight distribution.

3. Polymer composition according to claim 1 or 2, wherein the polyethylene is a homo- or copolymer.

4. Polymer composition according to claim 3, wherein the copolymer contains a comonomer selected from butene, hexene or octene.

5. Polymer composition according to any of the preceding claims wherein polyolefin wax has 100 to 180 carbon atoms, more preferably 130 to 150 carbon atoms.

6. Polymer composition according to any of the preceding claims, wherein the weight average molecular weight of the polyolefin wax is preferably 7000-8000 g/mol, and more preferably 7700 to 8000 g/mol.

7. Polymer composition according to any of the preceding claims wherein the polyolefin wax preferably has a density of 0.860 to 0.880 g/cm$^3$.

8. Polymer composition according to any of the preceding claims, wherein the polyolefin wax has a crystallinity of 60 to 65 %, and/or isotactic pentad index of 76.00 - 78.00, and/or a polydispersity index of 2- 8, and/or a melt viscosity less than 90 cP, more preferably 50-70 cP.

9. Polymer composition according to any of the preceding claims wherein the polyolefin wax has a dropping point of 142-148 °C.

10. Polymer composition according to any of the preceding claims wherein the polyolefin wax has a penetration index of 0.5 -1.0.

11. Polymer composition according to any of the preceding claims wherein additives are selected from antioxidant, UV stabilizer, UV absorber, neutralizer or mixtures thereof.

12. Container closure comprising, preferably consisting of, a polymer composition according to any of the preceding claims.

13. Container closure according to claim 12, which is a bottle cap, preferably a screw bottle cap.

**Patentansprüche**

1. Polymerzusammensetzung für einen Behälterverschluss, welche umfasst:

    (a) wenigstens 94,99 Gewichtsprozent Polyethylen, wobei das Polyethylen Polyethylen hoher Dichte mit einer Dichte von 0,940-0,970 g/m$^3$ und einem MFR2 von 0,5-15 g/10 min ist,
    (b) 0,01-1,0 Gewichtsprozent Polyolefinwachs, wobei das Polyolefinwachs ein Gewichtsmittelmolekulargewicht von bis zu 10.000 g/mol, eine Dichte von 0,850-0,921 g/cm$^3$ aufweist und aus Polyethylenwachs oder Polypropylenwachs ausgewählt ist,

(c) 0,01-5,0 Gewichtsprozent Additive, wobei die Gewichtsprozentanteile auf dem Gesamtgewicht der Polymerzusammensetzung basiert sind.

2. Polymerzusammensetzung nach Anspruch 1, wobei das Polyethylen eine unimodale oder multimodale, bevorzugt bimodale, Molekulargewichtsverteilung aufweist.

3. Polymerzusammensetzung nach Anspruch 1 oder 2, wobei das Polyethylen ein Homo-oder Copolymer ist.

4. Polymerzusammensetzung nach Anspruch 3, wobei das Copolymer ein Comonomer ausgewählt aus Buten, Hexen oder Octen enthält.

5. Polymerzusammensetzung nach einem der vorangehenden Ansprüche, wobei Polyolefinwachs 100 bis 180 Kohlenstoffatome, bevorzugt 130 bis 150 Kohlenstoffatome, aufweist.

6. Polymerzusammensetzung nach einem der vorangehenden Ansprüche, wobei das Gewichtsmittelmolekulargewicht des Polyolefinwachses bevorzugt 7000 bis 8000 g/mol und noch bevorzugter 7700 bis 8000 g/mol ist.

7. Polymerzusammensetzung nach einem der vorangehenden Ansprüche, wobei das Polyolefinwachs bevorzugt eine Dichte von 0,860 bis 0,880 g/cm$^3$ aufweist.

8. Polymerzusammensetzung nach einem der vorangehenden Ansprüche, wobei das Polyolefinwachs eine Kristallinität von 60 bis 65 % und/oder einen isotaktischen Pentadenindex von 76,00 - 78,00 und/oder einen Polydispersitätsindex von 2-8 und/oder eine Schmelzviskosität von weniger als 90 cP, noch bevorzugter 50-70 cP, aufweist.

9. Polymerzusammensetzung nach einem der vorangehenden Ansprüche, wobei das Polyolefinwachs einen Tropfpunkt von 142-148 °C aufweist.

10. Polymerzusammensetzung nach einem der vorangehenden Ansprüche, wobei das Polyolefinwachs einen Penetrationsindex von 0,5-1,0 aufweist.

11. Polymerzusammensetzung nach einem der vorangehenden Ansprüche, wobei Additive ausgewählt sind aus Antioxidationsmittel, UV-Stabilisator, UV-Absorptionsmittel, Neutralisator oder Mischungen derselben.

12. Behälterverschluss umfassend eine, vorzugsweise bestehend aus einer, Polymerzusammensetzung nach einem der vorangehenden Ansprüche.

13. Behälterverschluss nach Anspruch 12, welcher ein Flaschenverschluss, bevorzugt ein Schraubflaschenverschluss ist.

**Revendications**

1. Composition polymère pour la fermeture d'un récipient, qui comprend

a) au moins 94,99 % en poids d'un polyéthylène, où le polyéthylène est un polyéthylène haute densité ayant une densité de 0,940 - 0,970 g/cm$^3$ et un indice MFR2 de 0,5-15 g/10 min
b) 0,01-1,0 % en poids d'une cire polyoléfinique, où la cire polyoléfinique a une masse moléculaire moyenne en poids qui va jusqu'à 10 000 g/mol, une densité de 0,850 - 0,921 g/cm$^3$ et est sélectionnée entre une cire polyéthylénique et une cire polypropylénique
c) 0,01 - 5,0 % en poids d'additifs, où les pourcentages en poids sont rapportés au poids total de la composition polymère.

2. Composition polymère selon la revendication 1, où la distribution de la masse moléculaire du polyéthylène est unimodale ou multimodale, préférablement bimodale.

3. Composition polymère selon la revendication 1 ou 2, où le polyéthylène est un homo- ou un copolymère.

**4.** Composition polymère selon la revendication 3, où le copolymère contient un comonomère sélectionné parmi le butène, l'hexène ou l'octène.

**5.** Composition polymère selon l'une quelconque des revendications précédentes, où la cire polyoléfinique a de 100 à 180 atomes de carbone, plus préférablement de 130 à 150 atomes de carbone.

**6.** Composition polymère selon l'une quelconque des revendications précédentes, où la masse moléculaire moyenne en poids de la cire polyoléfinique est préférablement de 7 000 - 8 000 g/mol, et plus préférablement de 7 700 - 8 000 g/mol.

**7.** Composition polymère selon l'une quelconque des revendications précédentes, où la cire polyoléfinique a une densité qui va de 0,860 à 0,880 g/cm$^3$.

**8.** Composition polymère selon l'une quelconque des revendications précédentes, où la cire polyoléfinique a une cristallinité de 60 à 65 % et/ou une fraction de pentades isotactiques de 76,00 - 78,00 et/ou un indice de polydispersité de 2 - 8 et/ou une viscosité à l'état fondu inférieure à 90 cP, plus préférablement de 50 - 70 cP.

**9.** Composition polymère selon l'une quelconque des revendications précédentes, où la cire polyoléfinique a un point de goutte de 142 - 148 °C.

**10.** Composition polymère selon l'une quelconque des revendications précédentes, où la cire polyoléfinique a un indice de pénétration de 0,5 - 1,0.

**11.** Composition polymère selon l'une quelconque des revendications précédentes, où les additifs sont sélectionnés parmi les suivants : antioxydant, stabilisant UV, absorbeur UV, neutralisant ou mélanges de ceux-ci.

**12.** Fermeture de récipient comprenant, et préférablement consistant en, une composition polymère selon l'une quelconque des revendications précédentes.

**13.** Fermeture de récipient selon la revendication 12 qui est un bouchon de bouteille, préférablement un bouchon de bouteille à vis.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5045594 A
- US 5186991 A
- US 6399170 B
- WO 0162837 A
- US 4462502 A
- EP 73334 A
- EP 1655336 A1
- EP 2384351 A1
- US 6806313 B2
- EP 1146077 A1
- EP 1278797 A1
- US 6797756 B2
- WO 0032695 A1